# EUROPÄISCHE PATENTSCHRIFT

(11) **EP 2 246 965 B1**
(45) Veröffentlichungstag und Bekanntmachung des Hinweises auf die Patenterteilung: **10.06.2020**
(21) Anmeldenummer: 10003547.6
(22) Anmeldetag: 31.03.2010
(51) Int. Cl.: H02K 15/00, H02K 3/12

(54) **SANIERVERFAHREN FÜR DEN WICKELKOPF DES ROTORS EINES ELEKTRISCHEN GENERATORS**
REFURBISHMENT METHOD FOR THE COIL END OF THE ROTOR OF AN ELECTRIC GENERATOR
PROCÉDÉ DE RÉNOVATION DE LA TÊTE DE BOBINE D'UN ROTOR DE GÉNÉRATEUR ÉLECTRIQUE

(30) Priorität: 27.04.2009 DE 102009018751
(43) Veröffentlichungstag der Anmeldung: 03.11.2010
(73) Patentinhaber: General Electric Technology GmbH, 5400 Baden (CH)
(72) Erfinder: Pilichiewicz, Marek, 79761 Waldshut-Tiengen (DE)
(74) Vertreter: BRP Renaud & Partner mbB Rechtsanwälte Patentanwälte Steuerberater

(56) Entgegenhaltungen:
- WO-A1-2007/094018
- CH-A- 290 709
- DE-A1- 1 463 947
- US-A- 3 131 321

## Beschreibung

Die Erfindung betrifft ein Verfahren zum Sanieren des Wickelkopfes des Rotors eines elektrischen Generators für die Stromgewinnung in Kraftwerken nach dem Oberbegriff des Anspruchs 1; die Erfindung betrifft ferner einen - entsprechenden - Rotor eines elektrischen Generators für die Stromgewinnung in Kraftwerken nach dem Oberbegriff des Anspruchs 4.

Die Erfindung hat insbesondere die konstruktive Ausführung der Wicklung im Wickelkopfbereich des Rotors eines elektrischen Generators zum Gegenstand, wie exemplarisch in der CH 29070 sowie der DE 1 463 947 beschrieben. Der Rotor eines Turbogenerators im Leistungsbereich zwischen ca. 400 und 800 MVA verfügt über eine Kupferwicklung zur Erzeugung des elektromagnetischen Wechselfeldes. Diese Wicklung besteht dabei aus mehreren Spulen. Jede Spule besteht aus mehreren Windungen, welche im sogenannten Rotoraktivteil in Nuten untergebracht und mit Nutverschlußteilen gesichert sind. Die Spulen sind dabei um eine drehbare Rotorachse gewickelt. An den Rotorenden werden zur Bildung einer kompletten Spule die Halbwindungen aus den Nuten herausgeführt, in Umfangsrichtung gebogen und zu einer kompletten Windung miteinander verbunden. Diese Anordnung bildet den sogenannten Wickelkopf. Die Verbindung der Halbwindungen kann dabei auf unterschiedliche Weise ausgeführt sein.

Typisch sind zum einen drei Lötstellen je Wickelkopf. Dabei ist jeweils eine Lötstelle am Nutaustritt und eine Lötstelle in der Polmitte vorgesehen. Dieses Verfahren mit drei Lötstellen je Wickelkopf wird bei kompakten Wickelköpfen angewendet, deren Spulen in axialer Richtung eng gestapelt sind. Man verwendet in diesem Fall im Wickelkopf ein vom Nutbereich unterschiedliches Profil für den Kupferleiter. Dies erfordert eine Verjüngung der Windung, wenn sie aus der Nut austritt. Diese Verjüngung wird mittels einer Lötung zwischen den entsprechenden Windungsteilen bewerkstelligt. Die dritte Lötung befindet sich in der Polmitte und verbindet die beiden Windungsbögen im Bereich ihrer Stoßstelle. Die Bögen haben zwei Biegungen, nämlich zum einen eine 90°-Biegung für die Umlenkung von der axialen Nut kommend in die tangentiale Richtung mit einem Radius von ca. der 2 bis 3-fachen Profilbreite sowie zum anderen eine Biegung in Umfangsrichtung dem Wellendurchmesser folgend.

Typisch sind zum anderen auch zwei Lötstellen je Wickelkopf. Im Gegensatz zum vorbeschriebenen Typ mit drei Lötstellen wird auf den mit einem ordentlichen Radius ausgeführten 90°-Bogen verzichtet und stattdessen eine sogenannte Ecklötung realisiert. Aus Herstellungssicht hat dies den Vorteil, daß man nur mit geraden Leitern arbeitet und auf die aufwendige Fertigung der 90°-Biegung verzichten kann. Die Eckverbindung ist dabei eine Stumpflötung und erlaubt ebenfalls die Verwendung von schmäleren Profilen für einen kompakten Wickelkopf.

Die vorliegende Erfindung geht von beiden vorbeschriebenen Typen von Wickelköpfen aus, also von Wickelköpfen mit drei Lötstellen (1. Typ) sowie von Wickelköpfen mit zwei Lötstellen (2. Typ).

Bei der Sanierung von Rotoren werden häufig die Wicklungen ausgetauscht und gegen eine neue Wicklung mit neuem Kupfer ersetzt. Grund ist der Verschleiß der alten Wicklung, der sich als plastische Deformation ausdrückt, welche oft mit Rißbildungen verbunden ist. Diese Verschleißart kann zu Windungs-, Spulen- und Erdschlüssen führen mit der Folge einer eingeschränkten Einsatzbereitschaft oder im schlimmsten Fall sogar mit der Folge eines grundlegenden Generatorschadens. Ursache für diesen Verschleiß sind entweder fehlerhafte Lötungen oder die mit jeder Lötung unvermeidliche Herabsetzung der Festigkeit der Wicklung an der Lötstelle. Denn das Kupfer wird weich. Außerdem sind Lötstellen nicht mit wirtschaftlich vertretbarem Aufwand prüfbar. Dies bedeutet aber, daß diejenige Person, welche die Lötung durchführt, das entscheidende Glied in der Fertigung ist. Macht diese Person einen Fehler, kann dies katastrophale Auswirkungen haben. Man ist daher bestrebt, die Anzahl der Lötungen zu minimieren. Das besondere Problem bei der Sanierung von Rotoren besteht bei derartigen Rotoren, bei denen aufgrund einer bereits vorgegebenen, kompakten Geometrie im Wickelkopf auf ein schmäleres Profil gewechselt werden muß.

Davon ausgehend liegt der Erfindung die **Aufgabe** zugrunde, ein Verfahren zum Sanieren des Wickelkopfes des Rotors eines elektrischen Generators für die Stromgewinnung in Kraftwerken zu schaffen, welches ohne großen Materialaufwand technisch einfach durchführbar ist und welches die Anzahl der Lötungen auf ein Minimum reduziert; außerdem soll ein technisch einfach aufgebauter Rotor eines elektrischen Generators für die Stromgewinnung in Kraftwerken mit einem Minimum an Lötungen geschaffen werden.

Die technische **Lösung** ist verfahrensmäßig gekennzeichnet durch die Merkmale im Kennzeichen des Anspruchs 1.

Mit dem erfindungsgemäßen Verfahren ist eine Sanierung des Wickelkopfes des Rotors eines elektrischen Generators für die Stromgewinnung in Kraftwerken auf technisch einfache Weise mit einem Minimum an Lötungen möglich. Die Grundidee des Sanierungsverfahrens besteht darin, von einem einheitlichen Ausgangsprofil zur Schaffung der Windungen auszugehen. Dieses für sämtliche zu schaffenden Windungen bzw. Halbwindungen bestimmte Ausgangsprofil wird zu den entsprechenden Halbwindungen der Spulen gebogen. Dieses Ausgangsprofil ist somit für sämtliche Windungen/Halbwindungen sowie für sämtliche Spulen identisch. In den Bereichen des Wickelkopfes jedoch, wo dieses Ausgangsprofil zu breit ist, wird es ausgeschnitten, so daß ein schmäleres Profil entsteht. Es ist jedoch dabei in der Regel nicht notwendig, im Bereich des Wickelkopfes sämtliche Windungen auszuschneiden. In der Regel reicht es aus, wenn nur bei ein paar der Spulen die Windungen in der vorbeschriebenen Weise bearbeitet werden. In dem Bereich, wo die Profile der miteinander korrespondierenden Halbwindungs-Paare aneinanderstoßen, wird dann eine Lötung durchgeführt, und zwar im Bereich der Polmitte. Diese Lötung in der Polmitte ist in der Regel unkritisch. Der grundlegende Erfindungsgedanke besteht somit darin, bei sämtlichen Windungen der Spulen ein bezüglich des Querschnitts gemeinsames Ausgangsprofil entsprechender Länge zu verwenden, dieses zu den Halbwindungen zurechtzubiegen und im Wickelkopfbereich - wo nötig - auszuschneiden. Miteinander korrespondierende Halbwindungen werden dann durch Lötung in der Polmitte zu den Gesamt-Windungen zusammengefügt und miteinander verbunden. Der Vorteil dieses Verfahrens besteht darin, daß man auch bei einem kompakten Wickelkopf mit nur einer einzigen Lötung in der Polmitte auskommt. Da aber die Windung im Nutaustritt einstückig ausgebildet ist, hat man dort keine verminderte Festigkeit durch das Löten. Dadurch wird die Anzahl an Fehlerquellen beim Löten vermindert. Außerdem wird der hohe Aufwand für das Löten bei der zeitkritischen Montage der Neuwicklung reduziert. Schließlich ist es nicht notwendig, unterschiedliche Profile zur Verfügung zu stellen. Dadurch ist das erfindungsgemäße Verfahren auch wirtschaftlich. Schließlich ist es nur notwendig, so viele Windungen wie nötig auszuschneiden. In der Regel sind dies nur die ersten zwei oder drei Windungen.

Die Weiterbildung gemäß Anspruch 2 schlägt vor, daß die Windungen als Hohlleiter mit mehreren Kühlkanälen ausgebildet sind. Diese Hohlleiter dienen der Innenkühlung beispielsweise mit Luft oder Wasserstoff. Für die vorbeschriebene Profilreduzierung kann dann der Bereich eines oder mehrere Kühlkanäle abgetragen werden.

Schließlich schlägt die Weiterbildung gemäß Anspruch 3 vor, daß der Materialabtrag durch Fräsen, durch Wasserstrahlschneiden oder mittels Laser durchgeführt wird.

Die technische **Lösung** ist vorrichtungsmäßig gekennzeichnet durch die Merkmale im Kennzeichen des Anspruchs 4.

Dadurch ist ein technisch einfach aufgebauter Rotor eines elektrischen Generators für die Stromgewinnung in Kraftwerken mit einem Minimum an Lötungen geschaffen. Der Vorteil besteht darin, daß ein einheitliches Ausgangsprofil für die Windungen vorgesehen ist, welches entsprechend zu den Halbwindungen zurechtgebogen wird und bei Bedarf im Bereich der Wickelköpfe zur Verringerung der Breite materialmäßig abgetragen wird.

Das erfindungsgemäße Verfahren zum Sanieren des Wickelkopfes des Rotors eines elektrischen Generators für die Stromgewinnung in Kraftwerken sowie ein entsprechender Rotor werden nachfolgend anhand der Zeichnungen beschrieben. In diesen zeigt:
- Fig. 1: eine perspektivische Ansicht des Rotors mit der neuen Wick-lung;
- Fig. 2: die Wicklung des Rotors im Bereich des Wickelkopfes in einer Darstellung ohne die Rotorachse;
- Fig. 3: eine Darstellung entsprechend der in Fig. 2, jedoch ohne die Nuten zur Fixierung der Windungen;
- Fig. 4: einen Querschnitt durch das Profil der Windungen.

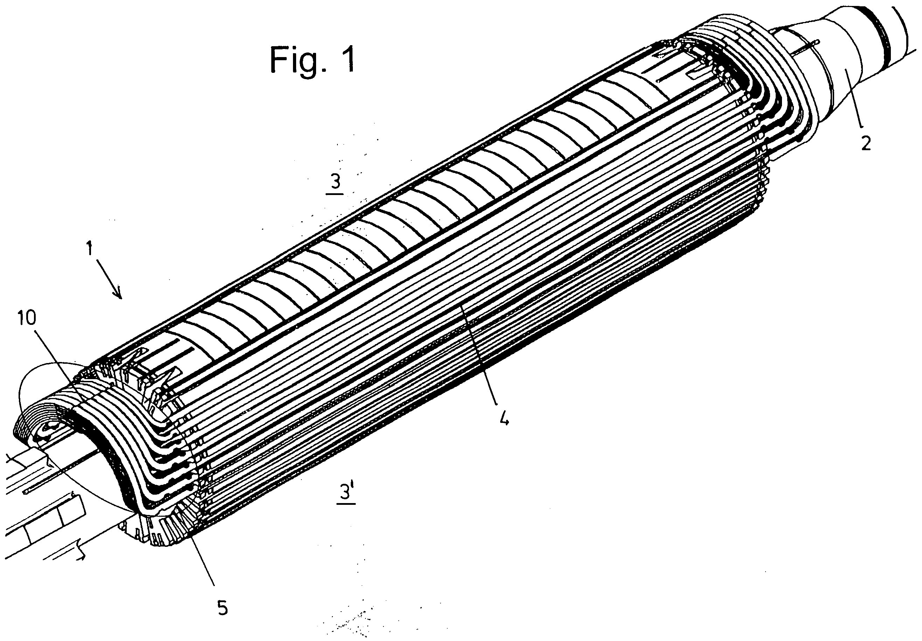

Der in Fig. 1 dargestellte Rotor 1 eines elektrischen Generators für die Stromgewinnung in Kraftwerken weist eine drehbare Rotorachse 2 auf. In Fig. 1 ist oben der erste Pol 3 und unten der zweite Pol 3' angedeutet. Dabei ist dem oberen Pol 3 eine Wicklung 4 zugeordnet, während der untere Pol 3' in dieser Darstellung keine Wicklung aufweist. Die beiden Enden der Wicklung 4 definieren jeweils den sogenannten Wickelkopf 5.

Die Darstellung zeigt den Rotor 1 nach der Sanierung der Wicklung 4 bzw. des Wickelkopfs 5, nachdem also die ursprüngliche Wicklung entfernt und durch eine neue Wicklung 4 ersetzt worden ist. Dabei besteht jede Wicklung 4 im dargestellten Ausführungsbeispiel aus sieben Spulen 6 und jede Spule 6 aus sieben Windungen 7.

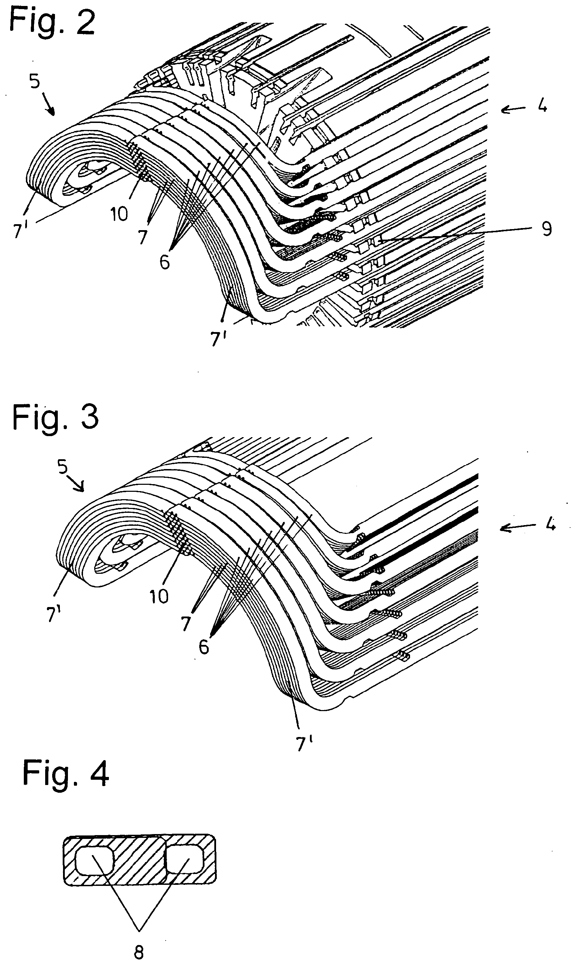

Die Schaffung der neuen Wicklung 4 ist wie folgt:
Es wird für sämtliche Windungen 7 für sämtliche Spulen 6 von einem einheitlichen Ausgangsprofil aus Kupfer ausgegangen, wie es in Fig. 4 im Querschnitt dargestellt ist. Dabei ist erkennbar, daß dieses Ausgangsprofil zwei Kühlkanäle 8 aufweist. Dies bedeutet, daß dieses Ausgangsprofil als Hohlleiter für eine Innenkühlung mit Luft oder Wasserstoff ausgebildet ist.

Dieses Ausgangsprofil wird entsprechend der vorgegebenen Kontur zu einer im wesentlichen U-förmigen Halbwindung 7' gebogen. Dabei besitzt diese Halbwindung 7' einen zur Rotorachse 2 parallelen Abschnitt, an welchen sich - einstückig - teilkreisförmige Abschnitte anschließen, welche konzentrisch zur Rotorachse 2 gebogen sind. Dabei sind diese Halbwindungen 7' in Nuten 9 gehalten.

Aufgrund der dichten Packung kann es im Bereich des Wickelkopfes 5, also im Bereich der kreisbogenförmigen Abschnitte der Halbwindungen 7' passieren, daß die Ausgangsprofile zu breit sind. Für diesen Fall wird das Querschnittsprofil modifiziert, indem die Breite verringert wird. In Fig. 4 ist angedeutet, daß zu diesem Zweck der rechte Bereich des Querschnittsprofils, also der Bereich mit dem rechten Kühlkanal 8 ausgeschnitten wird.

Im dargestellten Ausführungsbeispiel sind nicht sämtliche Windungen 7 bzw. Halbwindungen 7' im Bereich der kreisbogenförmigen Abschnitte hinsichtlich ihrer Profilbreite verringert, sondern nur die beiden innenliegenden Windungen 7. Die restlichen fünf, außenliegenden Windungen 7 sind hinsichtlich ihrer Profilbreite unverändert.

Miteinander korrespondierende Halbwindungen 7' werden im Bereich der Rotorachse dann mittels einer Lötung 10 fest miteinander verbunden.

### Bezugszeichenliste

- 1: Rotor
- 2: Rotorachse
- 3, 3': Pol
- 4: Wicklung
- 5: Wickelkopf
- 6: Spule
- 7: Windung
- 7': Halbwindung
- 8: Kühlkanal
- 9: Nut
- 10: Lötung

## Patentansprüche

1. Verfahren zum Sanieren des Wickelkopfes (5) des Rotors (1) eines elektrischen Generators für die Stromgewinnung in Kraftwerken,
wobei der zu sanierende Rotor (1) eine drehbare Rotorachse (2) aufweist sowie weiterhin für die beiden Pole (3, 3') des Rotors (1) jeweils eine Wicklung (4) aus mehreren Spulen (6), wobei jede Spule (6) wiederum aus mehreren Windungen (7) besteht,
wobei jede Windung (7) jeweils zwei zur Rotorachse (2) parallele Abschnitte sowie im Bereich der beiden Wickelköpfe (5) jeweils einen im wesentlichen kreisbogenförmigen Abschnitt aufweist und
wobei einstückige Halbwindungen (7') aus einem zur Rotorachse (2) parallelen Abschnitt sowie aus zwei im wesentlichen teilkreisförmigen Abschnitten im Bereich der beiden Wickelköpfe (7) verwendet werden, wobei das Ausgangsprofil zur Schaffung dieser einstückigen Halbwindungen (7') über die gesamte Länge gesehen die gleiche Profilbreite besitzt,
wobei nicht einstückig miteinander verbundene Teile der Windungen (7) durch Löten miteinander verbunden sind, wobei die beiden miteinander korrespondierende Halbwindungen (7') zur Schaffung der Windung (7) im Bereich der Polmitte miteinander verlötet werden,
**dadurch gekennzeichnet, dass**
nach dem Ausbau der alten Windungen diese durch neue Windungen (7) dergestalt ersetzt werden,
daß,
dass bei einem Teil der Spulen (6) oder bei sämtlichen Spulen (6) die im wesentlichen teilkreisförmigen Abschnitte der Halbwindungen (7') hinsichtlich ihrer Profilbreite durch Materialabtragung verringert werden.

2. Verfahren nach dem vorhergehenden Anspruch,
**dadurch gekennzeichnet,**
**dass** das Ausgangsprofil für die neuen Windungen (7) zwei oder mehr Kühlkanäle (8) aufweist und
**dass** zum Verringern der Profilbreite der Windungen (7) der Bereich eines oder mehrere Kühlkanäle (8) abgetragen wird.

3. Verfahren nach einem der vorhergehenden Ansprüche,
**dadurch gekennzeichnet,**
**dass** der Materialabtrag durch Fräsen, durch Wasserstrahlschneiden oder durch Laser durchgeführt wird.

4. Rotor (1) eines elektrischen Generators für die Stromgewinnung in Kraftwerken,
mit einer drehbaren Rotorachse (2) sowie
mit jeweils einer Wicklung (4) für die beiden Pole (3, 3') des Rotors (1),
wobei jede Wicklung (4) aus mehreren Spulen (6) besteht,
wobei jede Spule (6) wiederum aus mehreren Windungen (7) besteht,
wobei jede Windung (7) jeweils zwei zur Rotorachse (2) parallele Abschnitte sowie im Bereich der beiden Wickelköpfe (5) jeweils einen im wesentlichen kreisbogenförmigen Abschnitt aufweist und
wobei nicht einstückig miteinander verbundene Teile der Windungen (7) durch Löten miteinander verbunden sind, wobei einstückige Halbwindungen (7') aus einem zur Rotorachse (2) parallelen Abschnitt sowie aus zwei im wesentlichen teilkreisförmigen Abschnitten im Bereich der beiden Wickelköpfe (7) vorgesehen sind, und wobei die beiden miteinander korrespondierenden Halbwindungen (7') zur Schaffung der Windung (7) im Bereich der Polmitte miteinander verlötet sind,
**dadurch gekennzeichnet, dass**
bei einem Teil der Spulen (6) oder bei sämtlichen Spulen (6) die im wesentlichen teilkreisförmigen Abschnitte der Halbwindungen (7') hinsichtlich ihrer Profilbreite durch Materialabtragung im Vergleich zur Profilbreite im Bereich der zur Rotorachse (2) parallelen Abschnitte verringert sind.

## Claims

1. Method for refurbishment of the coil end (5) of the rotor (1) of an electric generator for power generation in power plants,
wherein the rotor (1) to be refurbished has a rotatable rotor axis (2) and one winding (4) of several coils (6) for each of the two poles (3, 3') of the rotor (1), wherein each coil (6) in turn consists of several turns (7),
wherein each turn (7) has two sections parallel to the rotor axis (2) and one substantially arc-shaped section in the region of each of the coil ends (5), and
wherein single-piece half-turns (7') consisting of one section parallel to the rotor axis (2) and two, substantially partially circular sections in the region of the two coil ends (7) are used, wherein the initial profile for the creation of these single-piece half-turns (7') has the same profile width when viewed over the entire length,
wherein parts of the turns (7) which are not connected to one another as a single piece are connected to one another by soldering, wherein the two matching half-turns (7') are soldered to one another in the region of the pole center in order to create the turn (7),
**characterized in that**,
after the old turns have been removed, they are replaced by new turns (7) in such a way
that,
in some of the coils (6) or in all of the coils (6), the substantially partially circular sections of the half-turns (7') with respect to their profile width are reduced by material removal.

2. Method according to the preceding claim,
**characterized in that**
the initial profile for the new turns (7) has two or more cooling ducts (8), and
that, in order to reduce the profile width of the turns (7), the region of one or more cooling ducts (8) is removed.

3. Method according to one of the preceding claims,
**characterized in that**
the material removal is carried out by milling, by waterjet cutting, or by laser.

4. Rotor (1) of an electric generator for power generation in power plants,
having a rotatable rotor axis (2) and
having a winding (4) for each of the two poles (3, 3') of the rotor (1),
wherein each winding (4) consists of several coils (6),
wherein each coil (6) in turn consists of several turns (7),
wherein each turn (7) has two sections parallel to the rotor axis (2) and one substantially arc-shaped section in the region of each of the coil ends (5), and
wherein parts, which are not connected to one another as a single piece, of the turns (7) are connected to one another by soldering, wherein single-piece half-turns (7'), consisting of one section parallel to the rotor axis (2) and of two, substantially partially circular sections in the region of the two coil ends (7), are provided, and wherein the two matching half-turns (7') are soldered to one another in the region of the pole center in order to create the turn (7),
**characterized in that**,
in some of the coils (6) or in all of the coils (6), the substantially partially circular sections of the half-turns (7') with respect to their profile width are reduced by material removal in comparison to the profile width in the region of the sections parallel to the rotor axis (2).

## Revendications

1. Procédé pour la rénovation de la tête de bobine (5) du rotor (1) d'un générateur électrique pour la production d'électricité dans des centrales électriques,
le rotor (1) à rénover présentant un axe de rotor (2) rotatif ainsi qu'en outre respectivement un enroulement (4) composé de plusieurs bobines (6) pour chacun des deux pôles (3, 3') du rotor (1), chaque bobine (6) étant à son tour composée de plusieurs enroulements (7),
chaque enroulement (7) présentant respectivement deux sections parallèles à l'axe de rotor (2) ainsi que respectivement une section essentiellement en forme d'arc de cercle dans la zone des deux têtes de bobine (5) et
des demi-enroulements (7') formés d'une pièce composés d'une section parallèle à l'axe de rotor (2) ainsi que de deux sections essentiellement en forme d'arc de cercle étant utilisés dans la zone des deux têtes de bobine (7), le profil de sortie pour la génération de ces demi-enroulements (7') formés d'une pièce possédant la même largeur de profil sur toute la longueur,
des parties des enroulements (7) non reliées les unes aux autres d'une seule pièce étant reliées les unes aux autres par soudage, les deux demi-enroulements (7') correspondant l'un à l'autre étant soudés l'un à l'autre dans la zone du centre des pôles pour la création de l'enroulement (7),
**caractérisé en ce que,**
après le démontage des anciens enroulements, ceux-ci sont remplacés par de nouveaux enroulements (7) de telle
façon
que pour une partie des bobines (6) ou pour toutes les bobines (6) les sections essentiellement en forme d'arc de cercle des demi-enroulements (7) sont réduites au niveau de leur largeur de profil par enlèvement de matériau.

2. Procédé selon la revendication précédente,
**caractérisé**
**en ce que** le profil de sortie pour les nouveaux enroulements (7) comprend deux ou plusieurs canaux de refroidissement (8) et
**en ce que** pour la réduction de la largeur de profil des enroulements (7) la zone d'un ou plusieurs canaux de refroidissement (8) est abrasée.

3. Procédé selon l'une quelconque des revendications précédentes,
**caractérisé**
**en ce que** l'enlèvement de matériau est effectué par fraisage, par découpe au jet d'eau ou au laser.

4. Rotor (1) d'un générateur électrique pour la production d'électricité dans des centrales électriques,
comprenant un axe de rotor (2) rotatif ainsi que
comprenant respectivement un enroulement (4) pour les deux pôles (3, 3') du rotor (1),
chaque enroulement (4) étant composé de plusieurs bobines (6),
chaque bobine (6) étant composée à son tour de plusieurs enroulements (7), chaque enroulement (7) présentant respectivement deux sections parallèles à l'axe de rotor (2) ainsi que respectivement une section essentiellement en forme d'arc de cercle dans la zone des deux têtes de bobine (5) et
des parties des enroulements (7) non reliées les unes aux autres d'une seule pièce étant reliées les unes aux autres par soudage, des demi-enroulements (7') formés d'une pièce composés d'une section parallèle à l'axe de rotor (2) ainsi que de deux sections essentiellement en forme d'arc de cercle étant prévus dans la zone des deux têtes de bobine (7), les deux demi-enroulements (7') correspondant l'un à l'autre étant soudés l'un à l'autre dans la zone du centre des pôles pour la création de l'enroulement (7),
**caractérisé en ce que,**
pour une partie des bobines (6) ou pour toutes les bobines (6) les sections essentiellement en forme d'arc de cercle des demi-enroulements (7) sont réduites au niveau de leur largeur de profil par enlèvement de matériau en comparaison à la largeur de profil dans la zone des sections parallèles à l'axe de rotor (2).
